# EUROPEAN PATENT SPECIFICATION

(11) **EP 2 570 645 B1**
(45) Date of publication and mention of the grant of the patent: **29.06.2016**
(21) Application number: 10851382.1
(22) Date of filing: 11.05.2010
(51) Int. Cl.: F02M 26/01, F02M 26/05, F02D 13/02, F02D 41/00

(54) **CONTROL DEVICE FOR INTERNAL COMBUSTION ENGINE**
STEUERUNGSVORRICHTUNG FÜR EINEN VERBRENNUNGSMOTOR
DISPOSITIF DE COMMANDE POUR MOTEUR À COMBUSTION INTERNE

(43) Date of publication of application: 20.03.2013
(73) Proprietor: TOYOTA JIDOSHA KABUSHIKI KAISHA, Toyota-shi, Aichi-ken, 471-8571 (JP)
(72) Inventor: NAKAGAWA, Masayoshi, Toyota-shi, Aichi-ken, 471-8571 (JP); IWATANI, Kazuki, Toyota-shi, Aichi-ken, 471-8571 (JP)
(74) Representative: Intès, Didier Gérard André
(86) International application number: PCT/JP2010/057970
(87) International publication number: WO 2011/141999

(56) References cited:
- EP-A2- 2 031 216
- WO-A1-2006/063372
- DE-A1- 10 348 366
- DE-A1-102008 042 872
- JP-A- 10 274 069
- JP-A- H04 175 452
- JP-A- 2009 114 931
- JP-U- 63 164 553
- US-A1- 2003 209 234

## Description

### Technical Field

The present invention reflates to a control apparatus for an internal combustion engine.

### Background Art

Techniques are widely used that perform exhaust gas recirculation (external EGR) incorporating an exhaust recirculation passage that connects an exhaust passage to an intake passage of an internal combustion engine and through which exhaust gas is recirculated to an intake side. If the amount of exhaust gas recirculated by the external EGR (hereinafter referred to as "external EGR gas") varies from one cylinder to another, an amount of external EGR gas in a certain cylinder is too much. Then, that particular cylinder tends to have an adverse effect, such as a misfire, reduction in torque, and generation of smoke. If an attempt is made to suppress these adverse effects, a sufficiently large amount of external EGR cannot be achieved as a whole, so that an effect of the external EGR (e.g. reduction in NOx emissions) cannot be sufficiently enjoyed.

JP-A-2009-24560 discloses an apparatus that, when the external EGR is to be performed, closes an exhaust valve at early timing using a variable valve actuating mechanism. Specifically, the apparatus closes the exhaust valve at timing the same as, or earlier than, timing at which an intake valve opens before a top dead center. As a result, a large amount of burned gas is left inside a cylinder and, when the intake valve opens, the burned gas flows back from the cylinder to an intake passage. Impetus of the backflow of the burned gas is intended to be used to mix sufficiently intake air inside the intake passage with external EGR gas. EP2031216 discloses the use of the intake valve closing timing to adjust air-fuel raio and EGR ratio of an engine.

### Prior Art Documents

### Patent Documents

Patent Document 1: JP-A-2009-24560
Patent Document 2: JP-A-11-36949
Patent Document 3: JP-A-11-36993
Patent Document 4: JP-A-2009-41488
Patent Document 5: JP-A-2005-299473
Patent Document 6: JP-A-2005-36663

### Summary of the Invention

### Problem to be Solved by the Invention

In the related art described above, however, the burned gas (specifically, internal EGR gas) left in the cylinder flows back into an inside of an intake manifold. Then, components contained in the burned gas gradually tend to be deposited on an inner wall of the intake manifold, which poses problems. Additionally, the earlier timing of closing the exhaust valve degrades scavenging efficiency, thus aggravating fuel consumption.

The present invention has been made to solve the foregoing problems and it is an object of the present invention to provide a control apparatus for an internal combustion engine that can prevent reliably an external EGR gas amount from being uneven among cylinders during performance of external EGR and prevent deposits from being deposited in an intake manifold.

### Solution to Problem

First aspect of the present invention is a control apparatus for an internal combustion engine, comprising:
an exhaust recirculation passage capable of performing external EGR that recirculates exhaust gas of the internal combustion engine to an intake manifold or a upper stream above the intake manifold;
an EGR valve for controlling an amount of exhaust gas to be recirculated through the exhaust recirculation passage;
a variable intake valve actuating device having at least a function of varying intake valve closing timing of the internal combustion engine; and
fresh air backflow control means for performing fresh air backflow control that causes part of fresh air drawn into a cylinder to flow back into an inside of the intake manifold by operating the variable intake valve actuating device, when the external EGR is to be started, so that the intake valve closing timing is retarded relative to a bottom dead center and retarded relative to that before the external EGR is started.

Second aspect of the present invention is the control apparatus for an internal combustion engine according to the first aspect, further comprising:
a throttle valve disposed upstream of the intake manifold, wherein
the fresh air backflow control means avoids performance of the fresh air backflow control when opening of the throttle valve is smaller than a predetermined opening.

Third aspect of the present invention is the control apparatus for an internal combustion engine according to the first aspect, wherein
the fresh air backflow control means avoids performance of the fresh air backflow control when load of the internal combustion engine is lower than predetermined load.

Fourth aspect of the present invention is the control apparatus for an internal combustion engine according to any one of the first to the third aspects, further comprising:
a supercharger for compressing intake air of the internal combustion engine;
a boost pressure adjusting actuator capable of adjusting boost pressure of the supercharger; and
boost pressure increasing means for controlling operation of the boost pressure adjusting actuator such that, when the fresh air backflow control is to be performed, the boost pressure is higher than that before the fresh air backflow control is started.

Fifth aspect of the present invention is the control apparatus for an internal combustion engine according to any one of the first to the fourth aspects, wherein
the variable intake valve actuating device has a function of varying an intake valve opening period; and
the fresh air backflow control means operates the variable intake valve actuating device such that, when the fresh air backflow control is to be performed, intake valve opening timing is advanced relative to that before the fresh air backflow control is started.

### Effects of the Invention

In the first aspect of the present invention, the fresh air backflow control causes part of the fresh air drawn into the cylinder to flow back into the inside of the intake manifold by retarding, when the external EGR is to be started, the intake valve closing timing relative to that before the external EGR is started. The backflow of the fresh air sufficiently mixes external EGR gas inside the intake manifold with the fresh air. A mixing ratio of the external EGR gas and the fresh air is, as a result, uniform inside the intake manifold, so that an amount of external EGR gas flowing into the cylinders can be equalized. This prevents the amount of external EGR gas from becoming excessive in a specific cylinder, hallowing adverse effects, such as a misfire, reduction in torque, and generation of smoke to be suppressed reliably. In such a fresh air backflow control, the fresh air inside the cylinder flows back into the intake manifold. Deposits can therefore be reliably prevented from being deposited on an inner surface of the intake manifold. Additionally, in the first aspect of the present invention, there is no need for advancing exhaust valve closing timing. Thus, reduction in scavenging efficiency can be prevented, so that excess fuel consumption can be avoided.

In the second aspect of the present invention, operation of the fresh air backflow control is avoided when the opening of the throttle valve disposed upstream of the intake manifold is small. When the opening of the throttle valve is small, flow of fresh air is thinned down by the throttle valve, which increases a flow velocity of the fresh air. This increase in the flow velocity promotes mixing with the external EGR gas. Variations in an external EGR gas amount in the cylinders therefore tend to be smaller, which reduces the need for performing the fresh air backflow control. Consequently, when the opening of the throttle valve is small, the fresh air backflow control is avoided and the intake valve closing timing is not retarded. Reduction in the amount of fresh air in the cylinder is thereby prevented.

In the third aspect of the present invention, fresh air backflow control means avoids operation of the fresh air backflow control when engine load is low. When the engine load is slow, the throttle valve opening is small. Therefore, flow of fresh air is restricted by the throttle valve, which increases the flow velocity of the fresh air. This increase in the flow velocity promotes mixing with the external EGR gas. Variations in the external EGR gas amount in the cylinders therefore tend to be smaller, which reduces the need for performing the fresh air backflow control. Consequently, when the engine load is slow, the fresh air backflow control is avoided and the intake valve closing timing is not to be retarded. Reduction in the amount of fresh air in the cylinder is thereby prevented.

In the fourth aspect of the present invention, when the fresh air backflow control is to be performed, operation of the boost pressure adjusting actuator is controlled such that the boost pressure is higher than that before the fresh air backflow control is started. Reduction in the amount of fresh air in the cylinder involved in retarding the intake valve closing timing can thereby be prevented.

In the fifth aspect of the present invention, when the fresh air backflow control is to be performed, the intake valve opening timing is advanced relative to that before the fresh air backflow control is started. A valve opening period of the intake valve is therefore extended. Reduction in the amount of fresh air in the cylinder involved in retarding the intake valve closing timing can thereby be prevented.

### Brief Description of Drawings

Fig. 1 illustrates a configuration of a system according to a first embodiment of the present invention.
Fig. 2 is a cross-sectional view showing one of the cylinders of a diesel engine shown in Fig. 1.
Fig. 3 illustrates a fresh air backflow control according to the first embodiment of the present invention.
Fig. 4 is a flowchart showing a routine performed in the first embodiment of the present invention.
Fig. 5 illustrates valve timing of an intake valve when, during the performance of the fresh air backflow control, a control is performed to advance an intake valve opening timing.

### Modes for Carrying Out the Invention

Specific embodiments to which the present invention is applied will be described below with reference to the accompanying drawings. Like or corresponding parts in the drawings are identified by the same reference numerals and descriptions for those parts will not be duplicated.

### First embodiment

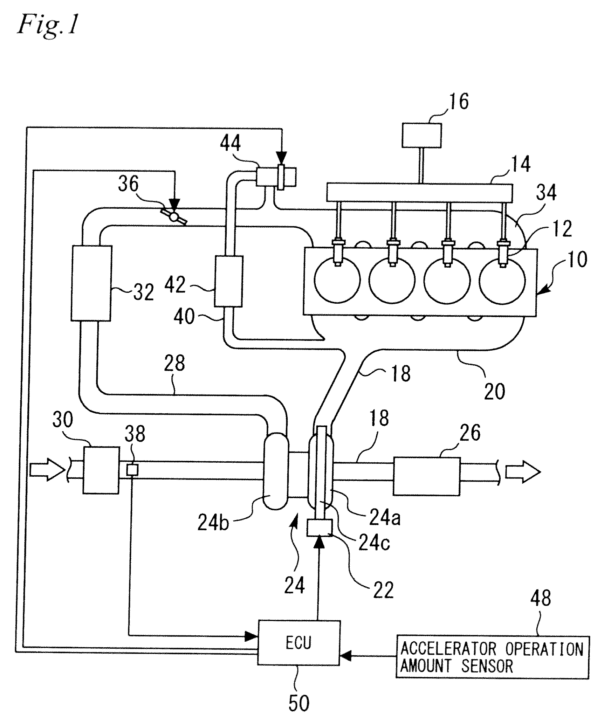

Fig. 1 illustrates a configuration of a system according to a first embodiment of the present invention. The system shown in Fig. 1 includes a diesel engine (compression ignition internal combustion engine) 10. The diesel engine 10 is mounted on, for example, a vehicle and serves as a power drive source therefor. The diesel engine 10 shown in Fig. 1 is an incline four-cylinder type; however, the number and arrangement of cylinders are not the only possible choice and the present invention may be applied to various other types of engines, such as incline three-cylinder, incline six-cylinder, V-type six-cylinder, and V-type eight-cylinder engines.

Each cylinder of the diesel engine 10 includes a fuel injector 12 that injects fuel directly into the cylinder. The fuel injector 12 of each cylinder is connected to a common rail 14. Fuel in a fuel tank not shown is pressurized to a predetermined fuel pressure by a supply pump 16, accumulated in the common rail 14, and supplied from the common rail 14 to each fuel injector 12.

Exhaust gas discharged from each cylinder of the diesel engine 10 is collected by an exhaust manifold 20 and then flows into an exhaust passage 18. The diesel engine 10 according to this embodiment includes a turbocharger 24 that performs supercharging using energy of the exhaust gas. The turbocharger 24 includes a turbine 24a and a compressor 24b. The turbine 24a is disposed in-line with the exhaust passage 18. The compressor 24b is disposed in-line with an intake passage 28. An exhaust purifying catalyst 26 is disposed in the exhaust passage 18 downstream of the turbine 24a.

The turbocharger 24 of this embodiment further includes a variable nozzle 24c that varies an inlet area of the turbine 24a. The variable nozzle 24c opens or closes as driven by an actuator 22. The smaller an opening of the variable nozzle 24c, the higher a flow velocity of the exhaust gas flowing into the turbine 24 a . Consequently, the turbocharger 24 increases its speed when the opening of the variable nozzle 24c is made small, which allows a boost pressure by the turbocharger 24 to be increased.

An air cleaner 30 is disposed near an inlet of the intake passage 28 of the diesel engine 10. Air drawn in through the air cleaner 30 is compressed by the compressor 24b of the turbocharger 24 before being cooled by an intercooler 32. The intake air that has passed the intercooler 32 flows through an intake manifold 34 into each cylinder.

A throttle valve 36 is disposed in the intake passage 28 between the intercooler 32 and the intake manifold 34. The throttle valve 36 is configured as an electronically controlled throttle valve whose opening is adjusted by a motor. Additionally, an air flow meter 38 for detecting an intake air amount is disposed in the intake passage 28 downstream of and near the air cleaner 30.

The diesel engine 10 includes an external EGR device for performing external exhaust gas recirculation (EGR) that recirculates part of the exhaust gas to the intake side. The external EGR device of this embodiment includes an exhaust recirculation passage (hereinafter referred to as an "EGR passage") 40, an EGR cooler 42 disposed on the way of the EGR passage 40, and an EGR valve 44 disposed downstream of the EGR cooler 42. In the arrangement shown in the figure, the EGR passage 40 has an upstream end connected to the exhaust manifold 20. The upstream end of the EGR passage 40 may, instead, be connected to the exhaust passage 18. Additionally, the EGR passage 40 has a downstream end connected to the intake passage 28 between the intake manifold 34 and the throttle valve 36. The downstream end of the EGR passage 40 may still be connected to the intake manifold 34 . Exhaust gas that is recirculated to the intake side via the EGR passage 40 will hereinafter be referred to "external EGR gals".

The system of this embodiment further includes an accelerator operation amount sensor 48 and an electronic control unit (ECU) 50. The accelerator operation amount sensor 48 detects an operation amount (accelerator operation amount) of an accelerator pedal depressed by a driver of the vehicle. Various types of sensors and actuators described above are electrically connected to the ECU 50. The ECU 50 drives the actuators according to a predetermined program based on outputs from the sensors to thereby control an operating condition of the diesel engine 10.

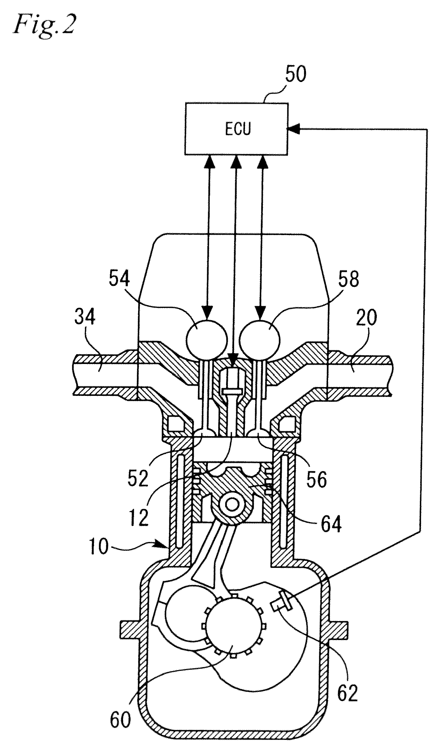

Fig. 2 is a cross-sectional view showing one of the cylinders of the diesel engine 10 shown in Fig. 1. The diesel engine 10 will be described in greater detail below. Referring to Fig. 2, each cylinder includes an intake valve 52, an exhaust valve 56, and a piston 64. A crank angle sensor 62 for detecting a rotational angle (crank angle) of a crankshaft 60 is disposed near the crankshaft 60 of the diesel engine 10. The crank angle sensor 62 is electrically connected to the ECU 50.

The diesel engine 10 further includes a variable intake valve actuating device 54 that has a function of varying closing timing of the intake valve 52 (hereinafter referred to as "intake valve closing timing") in a continuous or stepwise fashion. The variable intake valve actuating device 54 may further has a function of varying opening timing of the intake valve 52 (hereinafter referred to as "intake valve opening timing") in a continuous or stepwise fashion. Operation of the variable intake valve actuating device 54 is controlled by the ECU 50.

Arrangements of the variable intake valve actuating device 54 are not specifically limited. Nonetheless, any of the following mechanisms, for example, may be incorporated singly or in combination with another:
(1) A mechanism capable of selecting a specific cam from among multiple cams having different profiles from each other for the cam to be used for driving the intake valve 52;
(2) A variable phase mechanism capable of continuously advancing or retarding the opening timing and the closing timing of the intake valve 52 with the operating angle (valve opening period) of the intake valve 52 kept constant, by changing a phase of a camshaft for driving the intake valve 52;
(3) A variable operating angle mechanism having a rocker cam interposed between the intake valve 52 and the camshaft to thereby continuously vary the operating angle (valve opening period) of the intake valve 52;
(4) A mechanism capable of opening or closing the intake valve 52 at any timing by rotatably driving the camshaft with an electric motor; and
(5) A mechanism that forms the intake valve 52 using a electromagnetically-actuated valve capable of opening or closing at any timing.

It is noted that an exhaust valve actuating device 58 for driving the exhaust valve 56 may be a fixed type in which valve timing of the exhaust valve 56 is fixed or a variable valve actuating device that varies the valve timing of the exhaust valve 56. If the valve timing of the exhaust valve 56 is fixed, preferably the closing timing of the exhaust valve 56 is set to a timing at which the amount of exhaust gas left in the cylinder (internal EGR gas) is small (after the top dead center) .

When an engine speed and engine load of the diesel engine 10 fall within a predetermined range, the ECU 50 opens the EGR valve 44 to thereby perform external EGR. Performance of the external EGR allows combustion temperature and a NOx emissions discharge amount to be reduced. The ECU 50 stores in advance a map that establishes a relationship between the range of the engine speed and engine load with an optimum external EGR amount. The ECU 50 controls operation of the external EGR according to this map and, when the external EGR is performed, controls opening of the EGR valve 44 to thereby control the external EGR amount.

To reduce NOx emissions, desirably the external EGR amount is large. An excessive amount of external EGR gas, however, produces adverse effects, such as a misfire, reduction in torque, and generation of smoke. To reduce NOx emissions sufficiently while suppressing these adverse effects, ideally, variations in the amount of external EGR gas flowing into the cylinders are eliminated to thereby ensure that none of the cylinders contains an excessive amount of the external EGR gas. To achieve that end, fresh air and the external EGR gas need to be sufficiently mixed with each other in the intake manifold 34. Because the EGR passage 40 is connected to a point near the intake manifold 34, the external EGR gas flowing from the EGR passage 40 into the intake manifold 34 may flow into each cylinder without being mixed sufficiently with fresh air. In such a case, the amount of external EGR gas varies greatly from one cylinder to another. Therefore, the cylinder with an excessive amount of external EGR gas has an adverse effect, such as a misfire, reduction in torque, and generation of smoke. Immediately following the start of external EGR, in particular, the external EGR amount tends to overshoot a target value. As a result, variations in the amount of external EGR gas among the cylinders tend to become large. Therefore, torque step arising from reduction in torque tends to occur in the cylinder having an excessive amount of external EGR gas.

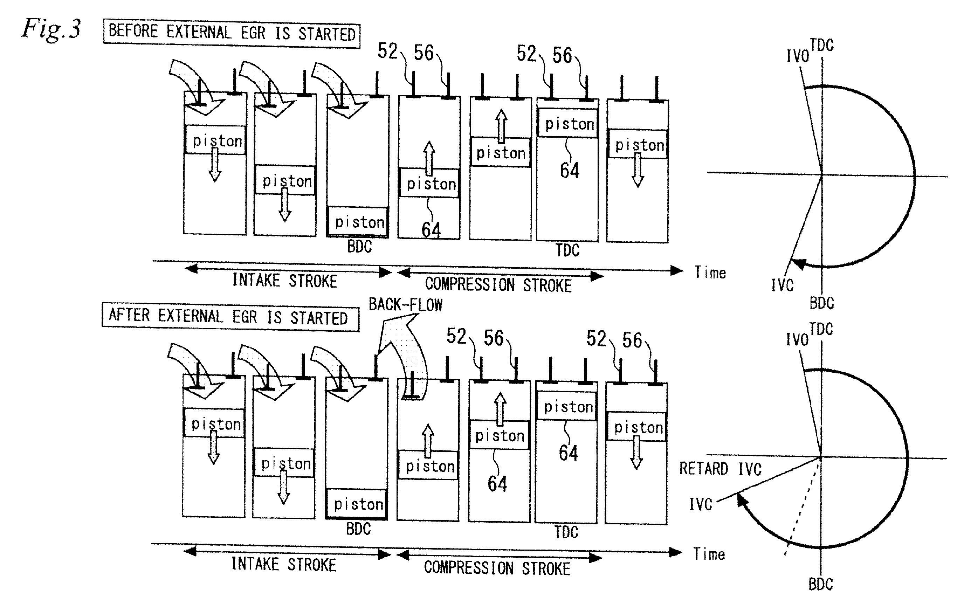

In order to reliably avoid adverse effects mentioned above, fresh air backflow control to be described below is performed in this embodiment to thereby equalize amounts of external EGR gas among the cylinders. Fig. 3 illustrates the fresh air backflow control according to this embodiment. The fresh air backflow control changes the intake valve closing timing (IVC) before and after the external EGR is started. The upper illustration of Fig. 3 shows valve timing of the intake valve 52 before the external EGR is started. Before the start of the external EGR, the intake valve closing timing is slightly after a bottom dead center (BDC). The intake valve 52 thus closes immediately after the piston 64 starts moving up from the bottom dead center on a compression stroke. Thus, substantially no fresh air that has been drawn into the cylinder flows back to the intake manifold 34 through the intake valve 52.

The lower illustration of Fig. 3 shows valve timing of the intake valve 52 after the external EGR is started, specifically, during performance of the fresh air backflow control. When the external EGR is started, the intake valve closing timing is changed to timing that is retarded from that before the external EGR is started. As a result, the intake valve 52 is open even after the piston 64 starts moving up from the bottom dead center on the compression stroke. The fresh air previously drawn into the cylinder therefore is pushed by the piston 64 and then flows back into the intake manifold 34 through the intake valve 52. Impetus with which part of the fresh air in the cylinder flows back into the intake manifold 34 in this manner is used to mix sufficiently the external EGR gas in the intake manifold 34 with the fresh air. As a result, a mixing ratio of the external EGR gas and the fresh air is uniform inside the intake manifold 34, so that the amount of external EGR gas flowing into the cylinders can be equalized. This prevents the amount of external EGR gas from becoming excessive in a specific cylinder, thereby reliably preventing the adverse effects, such as the misfire, reduction in torque, and generation of smoke. Additionally, variations in the amount of external EGR gas among the cylinders are minimized, which allows a maximum amount of external EGR gas to be introduced to each cylinder to the extent that no adverse effects are produced. The external EGR amount can thereby be increased as a whole, so that NOx emissions can be sufficiently reduced.

What flows back from the cylinder into the intake manifold 34 in the fresh air backflow control is mainly fresh air containing no combusted components. Deposits can therefore be reliably prevented from being deposited on an inner surface of the intake manifold 34. Additionally, the fresh air backflow control eliminates the need for advancing exhaust valve closing timing. Reduction in scavenging efficiency can therefore be avoided, so that fuel consumption is not adversely affected.

It is noted that, in a configuration having variable valve timing of the exhaust valve 56, deposits can be even more reliably prevented from being deposited on the inner surface of the intake manifold 34 during the performance of the fresh air backflow control. Preferably, therefore, control is performed to bring the closing timing of the exhaust valve 56 to timing at which the internal EGR gas amount is small (after the top dead center).

If the intake valve closing timing is retarded by the fresh air backflow control, part of the fresh air previously drawn into the cylinder flows back to the intake manifold 34. This results in a reduced amount of fresh air in the cylinder as compared with formal intake valve closing timing. To prevent the amount of fresh air in the cylinder from being reduced, this embodiment adjusts the variable nozzle 24c of the turbocharger 24 in a closing direction during performance of the fresh air backflow control. Adjusting the variable nozzle 24c of the turbocharger 24 in the closing direction increases boost pressure, which allows reduction in the amount of fresh air in the cylinder to be avoided.

Additionally, in this embodiment, the fresh air backflow control is not to be performed when the opening of the throttle valve 36 is small (engine load is low). When the opening of the throttle valve 36 is small, flow of fresh air passing through the intake passage 28 is regulated by the throttle valve 36, which increases a flow velocity of the fresh air. This increase in the flow velocity promotes mixing with the external EGR gas flowing from the EGR passage 40. Variations in the external EGR gas amount in the cylinders therefore tend to be smaller, which reduces the need for performing the fresh air backflow control. Consequently, when the opening of the throttle valve 36 is small, the fresh air backflow control is avoided and the intake valve closing timing is not to be retarded. Reduction in the amount of fresh air in the cylinder is thereby prevented.

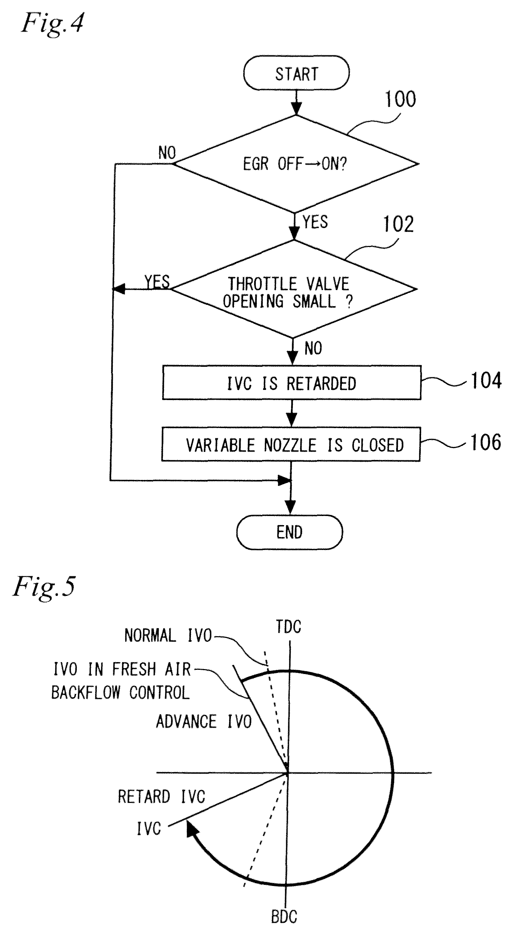

Fig. 4 is a flowchart showing a routine performed by the ECU 50 in this embodiment in order to achieve the foregoing functions. In the routine shown in Fig. 4, it is first determined whether a state in which the external EGR is stopped (the external EGR is OFF) is switched to a state in which the external EGR is performed (the external EGR is ON), specifically, whether the external EGR is started (step 100). The determination may be made based on whether the EGR valve 44 shifts from a closed state to an open state. If there is a delay from a point in time at which the EGR valve 44 opens to a point in time at which the external EGR gas flows into the intake manifold 34, a point in time after the lapse of the delay relative to valve opening timing of the EGR valve 44 may be determined to be the point in time at which the external EGR is started.

If it is determined in step 100 that the external EGR is yet to be started, subsequent steps of this routine do not need to be performed and the processing of this routine is terminated. If, on the other hand, it is determined in step 100 that the external EGR is started, it is next determined whether the opening of the throttle valve 36 is smaller than predetermined opening (step 102). The predetermined opening is established in advance as a reference for determining whether the opening is so small as to promote mixing of the external EGR gas and the fresh air with the flow velocity of the fresh air that has flowed past the throttle valve 36 becoming sufficiently high. If it is determined in step 102 that the opening of the throttle valve 36 is smaller than the predetermined opening, the flow velocity of the fresh air that has lowed past the throttle valve 36 is sufficiently high and mixing of the external EGR gas and the fresh air is promoted, so that the fresh air backflow control can be determined to be unnecessary. In this case, the routine is terminated and performance of the fresh air backflow control is avoided.

If, on the other hand, it is determined in step 102 that the opening of the throttle valve 36 is more than the predetermined opening, the fresh air backflow control is determined to be necessary and the fresh air backflow control is performed. Specifically, the variable intake valve actuating device 54 is controlled such that the intake valve closing timing is retarded relative to that before the external EGR is started (step 104). In step 104, control may be performed such that the intake valve closing timing is retarded more at greater opening of the throttle valve 36.

If the fresh air backflow control is started in step 104, the opening of the variable nozzle 24c of the turbocharger 24 is adjusted in a closing direction relative to that before the fresh air backflow control is started (step 106). This increases speed of the turbocharger 24 to thereby increase the boost pressure. Consequently, reduction in the amount of fresh air in the cylinder as a result of the delayed intake valve closing timing can be prevented.

In this embodiment, the necessity of the fresh air backflow control is determined in step 102 based on the opening of the throttle valve 36. In the present invention, however, the necessity of the fresh air backflow control may be determined based on engine load. A range that does not require the fresh air backflow control in which the opening of the throttle valve 36 remains small corresponds to a low load range. A range that requires the fresh air backflow control in which the opening of the throttle valve 36 is large corresponds to a medium-to-high load range. Whether the fresh air backflow control is necessary or not may therefore be determined based on the engine load, whether the engine load is in the low load range or the medium-to-high load range.

In addition, the present invention does not limit the method for preventing reduction in the amount of fresh air in the cylinder during the performance of the fresh air backflow control only to that which adjusts the opening of the variable nozzle 24c of the turbocharger 24 in the closing direction as in the embodiment. For example, if an electric motor for assisting in rotation of the turbocharger is included as a boost pressure adjusting actuator, the reduction in the amount of fresh air in the cylinder during the performance of the fresh air backflow control may be prevented by driving the electric motor during the performance of the fresh air backflow control to thereby increase the speed of the turbocharger for increased boost pressure.

If the variable intake valve actuating device 54 has a function of varying the intake valve opening timing, the reduction in the amount of fresh air in the cylinder may be prevented by controlling, during the performance of the fresh air backflow control, to adjust the intake valve opening timing to a timing earlier than before the fresh air backflow control is started. Fig. 5 illustrates valve timing of the intake valve 52 when, during the performance of the fresh air backflow control, the control is performed to advance the intake valve opening timing. Referring to Fig. 5, during the performance of the fresh air backflow control, the intake valve opening timing is advanced to extend a valve opening period of the intake valve 52, so that fresh air can more readily enter the cylinder. This prevents the amount of fresh air in the cylinder from being reduced due to the fresh air backflow control. If the control to advance the intake valve opening timing is also performed during the performance of the fresh air backflow control as shown in Fig. 5, control to increase the boost pressure as by closing the variable nozzle 24c in step 106 may be omitted.

The variable nozzle 24c in the first embodiment described above corresponds to the "boost pressure adjusting actuator" in the fourth aspect of the present invention. Similarly, the performance of the processing of steps 100, 102, and 104 by the ECU 50 in the first embodiment described above achieves the "fresh air backflow control means" in the first and second aspects of the present invention. The performance of the processing of step 106 by the ECU 50 in the first embodiment described above achieves the "boost pressure increasing means" in the fourth aspect of the present invention.

- 10: diesel engine
- 12: fuel injector
- 18: exhaust passage
- 20: exhaust manifold
- 24: turbocharger
- 28: intake passage
- 34: intake manifold
- 36: throttle valve
- 40: EGR passage
- 44: EGR valve
- 52: intake valve
- 54: intake valve actuating device
- 56: exhaust valve

## Claims

1. A control apparatus for an internal combustion engine, **characterized by**:
an exhaust recirculation passage (40) capable of performing external EGR that recirculates exhaust gas of the internal combustion engine (10) to an intake manifold (34);
an EGR valve (44) for controlling an amount of exhaust gas to be recirculated through the exhaust recirculation passage (40);
a variable intake valve actuating device (54) having at least a function of varying intake valve closing timing of the internal combustion engine (10);
a supercharger (24) for compressing intake air of the internal combustion engine (10);
a boost pressure adjusting actuator (24c) capable of adjusting boost pressure of the supercharger (24);
fresh air backflow control means for causing part of fresh air drawn into a cylinder during the external EGR to flow back into an inside of the intake manifold (34) and mixing an external EGR gas in the intake manifold (34) with fresh air by changing the intake valve closing timing such that the intake valve closing timing during the external EGR is retarded relative to a bottom dead center and retarded relative to the intake valve closing timing before the external EGR; and
boost pressure increasing means for controlling operation of the boost pressure adjusting actuator such that the boost pressure after the fresh air backflow control means changes the intake valve closing timing is higher than the boost pressure before the fresh air backflow control means changes the intake valve closing timing.

2. The control apparatus for an internal combustion engine according to claim 1, further comprising:
a throttle valve (36) disposed upstream of the intake manifold (34), wherein
the fresh air backflow control means does not operate when opening of the throttle valve (36) is smaller than a predetermined opening.

3. The control apparatus for an internal combustion engine (10) according to claim 1, wherein
the fresh air backflow control means does not operate when load of the internal combustion engine (10) is lower than predetermined load.

4. The control apparatus for an internal combustion engine (10) according to any of claims 1 to 3, wherein
the variable intake valve actuating device (54) has a function of varying an intake valve opening period; and
the fresh air backflow control means operates the variable intake valve actuating device (54) such that, when the fresh air backflow control is to be performed, intake valve opening timing is advanced relative to that before the fresh air backflow control is started.

## Patentansprüche

1. Steuerungsvorrichtung für einen Verbrennungsmotor, **gekennzeichnet durch**:
einen Abgasrückführungskanal (40), der in der Lage ist, externe AGR durchzuführen, die Abgas des Verbrennungsmotors (10) zu einem Einlasskrümmer (34) rückführt,
ein AGR-Ventil (44) zum Steuern einer **durch** den Abgasrückführungskanal (40) rückzuführenden Abgasmenge,
eine variable Einlassventilbetätigungsvorrichtung (54) mit mindestens einer Funktion des Variierens des Einlassventilschließzeitpunkts des Verbrennungsmotors (10),
einen Lader (24) zum Verdichten von Einlassluft des Verbrennungsmotors (10),
einen Ladedruckeinstellaktor (24c), der in der Lage ist, den Ladedruck des Laders (24) einzustellen,
ein Frischluftrückströmsteuerungsmittel zum Bewirken, dass ein Teil der Frischluft, die während der externen AGR in einen Zylinder gesaugt wird, in ein Inneres des Einlasskrümmers (34) zurückströmt, und Mischen eines externen AGR-Gases in dem Einlasskrümmer (34) mit Frischluft **durch** Ändern des Einlassventilschließzeitpunkts derart, dass der Einlassventilschließzeitpunkt während der externen AGR relativ zu einem unteren Totpunkt nach spät verstellt wird und relativ zu dem Einlassventilschließzeitpunkt vor der externen AGR nach spät verstellt wird, und
ein Ladedruckerhöhungsmittel zum Steuern des Betriebs des Ladedruckeinstellaktors derart, dass der Ladedruck, nachdem das Frischluftrückströmsteuerungsmittel den Einlassventilschließzeitpunkt ändert, höher ist als der Ladedruck, bevor das Frischluftrückströmsteuerungsmittel den Einlassventilschließzeitpunkt ändert.

2. Steuerungsvorrichtung für einen Verbrennungsmotor nach Anspruch 1, ferner umfassend:
eine Drosselklappe (36), die dem Einlasskrümmer (34) vorgelagert angeordnet ist, wobei
das Frischluftrückströmsteuerungsmittel nicht betrieben wird, wenn eine Öffnung der Drosselklappe (36) kleiner als eine vorgegebene Öffnung ist.

3. Steuerungsvorrichtung für einen Verbrennungsmotor (10) nach Anspruch 1, wobei
das Frischluftrückströmsteuerungsmittel nicht betrieben wird, wenn eine Last des Verbrennungsmotors (10) kleiner als eine vorgegebene Last ist.

4. Steuerungsvorrichtung für einen Verbrennungsmotor (10) nach einem beliebigen der Ansprüche 1 bis 3, wobei
die variable Einlassventilbetätigungsvorrichtung (54) eine Funktion des Variierens eines Einlassventilöffnungszeitraums hat, und
das Frischluftrückströmsteuerungsmittel die variable Einlassventilbetätigungsvorrichtung (54) derart betreibt, dass, wenn die Frischluftrückströmsteuerung durchgeführt werden soll, der Einlassventilöffnungszeitpunkt relativ zu jenem, bevor die Frischluftrückströmsteuerung gestartet wird, nach vorn verstellt wird.

## Revendications

1. Appareil de commande pour un moteur à combustion interne, **caractérisé par** :
un passage de recirculation d'échappement (40) capable d'effectuer une EGR externe qui fait recirculer le gaz d'échappement du moteur à combustion interne (10) vers un collecteur d'admission (34) ;
une soupape d'EGR (44) pour commander une quantité de gaz d'échappement à faire recirculer à travers le passage de recirculation d'échappement (40) ;
un dispositif d'actionnement variable de soupape d'admission (54) ayant au moins une fonction de modification de calage de fermeture de soupape d'admission du moteur à combustion interne (10) ;
un compresseur (24) pour comprimer l'air d'admission du moteur à combustion interne (10) ;
un actionneur d'ajustement de pression de suralimentation (24c) capable d'ajuster une pression de suralimentation du compresseur (24) ;
des moyens de commande de reflux d'air frais pour amener une partie d'air frais aspirée dans un cylindre pendant l'EGR externe à refluer à l'intérieur du collecteur d'admission (34) et pour mélanger un gaz d'EGR externe dans le collecteur d'admission (34) avec de l'air frais en modifiant le calage de fermeture de soupape d'admission de sorte que le calage de fermeture de soupape d'admission pendant l'EGR externe soit retardé par rapport à un point mort bas et retardé par rapport au calage de fermeture de soupape d'admission avant l'EGR externe ; et
des moyens d'augmentation de pression de suralimentation pour commander une opération de l'actionneur d'ajustement de pression de suralimentation de sorte que la pression de suralimentation après que les moyens de commande de reflux d'air frais ont modifié le calage de fermeture de soupape d'admission soit supérieure à la pression de suralimentation avant que les moyens de commande de reflux d'air frais aient modifié le calage de fermeture de soupape d'admission.

2. Appareil de commande pour un moteur à combustion interne selon la revendication 1, comprenant en outre :
un papillon des gaz (36) disposé en amont du collecteur d'admission (34), dans lequel
les moyens de commande de reflux d'air frais n'agissent pas lorsque l'ouverture du papillon des gaz (36) est inférieure à une ouverture prédéterminée.

3. Appareil de commande pour un moteur à combustion interne (10) selon la revendication 1, dans lequel
les moyens de commande de reflux d'air frais n'agissent pas lorsque la charge du moteur à combustion interne (10) est inférieure à une charge prédéterminée.

4. Appareil de commande pour un moteur à combustion interne (10) selon l'une quelconque des revendications 1 à 3, dans lequel
le dispositif d'actionnement variable de soupape d'admission (54) a pour fonction de modifier une période d'ouverture de soupape d'admission ; et
les moyens de commande de reflux d'air frais actionnent le dispositif d'actionnement variable de soupape d'admission (54) de sorte que, lorsque la commande de reflux d'air frais doit être effectuée, le calage d'ouverture de soupape d'admission soit avancé par rapport à celui avant que la commande de reflux d'air frais ait débuté.
